# EUROPEAN PATENT SPECIFICATION

(11) **EP 3 654 466 B1**
(45) Date of publication and mention of the grant of the patent: **26.01.2022**
(21) Application number: 18206675.3
(22) Date of filing: 16.11.2018
(51) Int. Cl.: H02B 1/03

(54) **METER CARRIER BOARD FOR MOUNTING A METERING DEVICE IN A METER CABINET AND METER CABINET INCLUDING SUCH A METER CARRIER BOARD**
ZÄHLERTRÄGERPLATTE ZUR MONTAGE EINER ZÄHLERVORRICHTUNG IN EINEM ZÄHLERSCHRANK UND ZÄHLERGEHÄUSE MIT SOLCH EINER ZÄHLERTRÄGERPLATTE
PLAQUE DE SUPPORT DE COMPTEUR POUR LE MONTAGE D'UN DISPOSITIF DE MESURE DANS UNE ARMOIRE DE COMPTAGE ET ARMOIRE DE COMPTAGE COMPRENANT UNE TELLE PLAQUE DE SUPPORT

(43) Date of publication of application: 20.05.2020
(73) Proprietor: ABB Schweiz AG, 5400 Baden (CH)
(72) Inventor: Roth, Michael, 77880 Sasbach (DE)
(74) Representative: Kesselhut, Wolf

(56) References cited:
- DE-A1- 1 918 963
- DE-A1-102016 202 212
- DE-C- 546 361
- DE-C- 550 337
- DE-U- 7 501 392
- DE-U1- 8 701 000

## Description

The invention concerns a meter carrier board for mounting at least one metering device in a meter cabinet, wherein said meter carrier board comprises a three-point mount with at least a first vertically extending slotted hole and at least one laterally slotted hole which are adapted to receive fastening bolts for mechanically coupling said metering device to the front side of said meter carrier board according to the preamble of claim 1.

Meter cabinets are used in almost all electrified buildings to contain the wiring and distribute the electric energy supplied from the outside via a low-voltage network to the respective circuits and connection devices inside a building, but mainly to measure the electric energy supplied to and consumed in the electrical building, particularly for billing purposes. Nowadays meter cabinets which are installed in buildings that are located in the territory of the Federal Republic of Germany, must be in compliance with the regulations of the DIN 43880. The further standard VDE 0603-100 describes the adaptation of standards for meter panels to carry electronic electricity meters, also called eHZ (elektronischer Haushaltszähler, in English electronic household meter), to integrate required future measuring systems.

The meter carrier boards with three point mount which are known to be in compliance with the DIN 43870 and VDE 0603-100 standard are manufactured in one piece and comprise on their front side at least one horizontally arranged slotted hole and at least one further vertically extending slotted hole, to which a known metering device, like a Ferraris Counter for measuring the amount of electric energy can be mounted by means of screws or bolts. Also known are meter carrier boards which comprise two pairs of horizontally arranged slotted holes. In order to allow for a side by side mounting of two or more metering devices, the known meter cabinets usually include a metering section with two or more mounting locations to which the meter carrier boards can be fastened in a module type manner with their three point mounts located at the front side thereof. The supply lines and outgoing lines to which the metering devices are connected in order to meter the flow of electric energy, are located on the rear side of each meter carrier board and routed in a vertical direction to the upper mains connection area (NAR) and the lower system-side connection area (AAR) of a metering section within a distribution cabinet or switch gear cabinet.

A meter board of the afore-mentioned type comprising a closed cable duct for routing cables to run within the meter carrier board in a protected manner is disclosed in DE 75 01 392 U. Similar meterboards are described in DE 102016202212 A1, DE 8701000U1, DE 1918963 A1 and DE 550 337 C.

The technical standards such as VDE 0603-100 do not permit any cables like cross wiring data and/or wires to the voltage supply connecting and/or supplying electrical devices within the meter cabinet to run behind a meter carrier board when mounted in a metering section of a meter cabinet. A reason may be to avoid any counting errors or electrical disturbances of the calibrated metering devices mounted to a meter carrier board in a meter cabinet, which in case of a Ferraris Counters is likely to be caused by the electromagnetic field of a non-shielded electric current flowing nearby the metering device,

Accordingly, it is an object of the present invention to provide a meter carrier board with a three-point mount for mounting an electrical metering device in a meter cabinet which allows cables like cross wiring data and/or wires to the voltage supply connecting and/or supplying electrical devices within the meter cabinet, such as electronic electricity meters or communication devices like a router, to be routed in compliance with DIN 43870 and VDE 0603-100 standard. It is also an object of the present invention to provide a meter carrier board with a three-point mount for mounting an electrical metering device in a meter cabinet which allows for a lateral interconnection of two or more metering devices, in particular smart metering devices, which are mounted side by side on associated carrier boards at two or more neighboring mounting locations of a metering section in a meter cabinet, with metering and/or data cables in compliance with DIN 43870 and VDE 0603-100 standard.

This object is achieved by a meter carrier board as claimed in claim 1.

According to the invention, said meter carrier board is configured to provide at least one cable duct within the meter carrier board for routing cables to run within the meter carrier board, wherein the cable duct is a closed duct and the cables are within the cable duct protected against unauthorized access. The meter carrier board is composed of a housing having two opposing side walls and a front panel comprising said three-point mount, said front panel being configured to cover the interior of the housing and having an opening and being adapted to be firmly coupled to said housing by fastening elements; wherein a lateral cable duct is formed inside said housing, said lateral cable duct running in a direction perpendicular to the direction of said side walls and communicating with a lateral opening which is formed in at least one of said side walls. Said lateral opening is covered by a removable cover, and said lateral cable duct communicates with said opening in said front panel and is adapted to route metering and/or data cables from said metering device to said lateral opening in said side wall.

In a preferred embodiment, said cables are cross-wiring data cables and/or patching cables and/or wires for voltage supply connecting and/or supplying electrical devices within the meter cabinet.

Surprisingly, it has been found that it is possible to find an arrangement for routing cross-wiring data cables and/or patching cables and/or wires for voltage supply connecting and/or supplying electrical devices within the distribution cabinet or switchboard cabinet which is in compliance with DIN 43870 and VDE 0603-100 standard and even has the advantage of reduced electrical disturbances. In a meter carrier board according to the invention, the cables are routed not on the backside of the meter carrier board, but within the interior of the meter carrier board, which is in compliance with DIN 43870 and VDE 0603-100 standard. The cables are less prone to electrical disturbances caused by electromagnetic fields of non-shielded electric current flowing nearby the metering device and flowing in cables at the rear side of the meter carrier board.

Moreover, it is a further object of the present invention to provide a meter cabinet which allows for a lateral wiring of two or more metering devices, in particular smart metering devices, which are installed side by side at neighboring mounting locations, in compliance with DIN 43870 and VDE 0603-100 standard. This object is achieved by a meter cabinet as claimed in claim 11. Further objects of the invention and further advantages of the invention are included and disclosed in the sub claims.

The invention is hereinafter described with reference to the accompanying drawings. In the drawings
- Fig. 1: is schematic 3-dimensional front view of an assembled meter carrier board according to the present invention,
- Fig. 2: is a schematic 3-dimensional front view of the meter carrier board,
- Fig. 3: is schematic 3-dimensional front view of the front panel of a meter carrier board according to the present invention,
- Fig. 4: is a schematic 3-dimensional front view of the housing and the front panel before connecting both to the meter carrier board of Fig. 1,
- Fig. 5: is an enlarged view of the communicating lateral cable ducts and lateral openings formed in the housings of two neighboring meter carrier boards and, and
- Fig. 6: is schematic 3-dimensional front view of two neighboring assembled meter carrier board with metering devices indicated in dotted lines according to the invention.

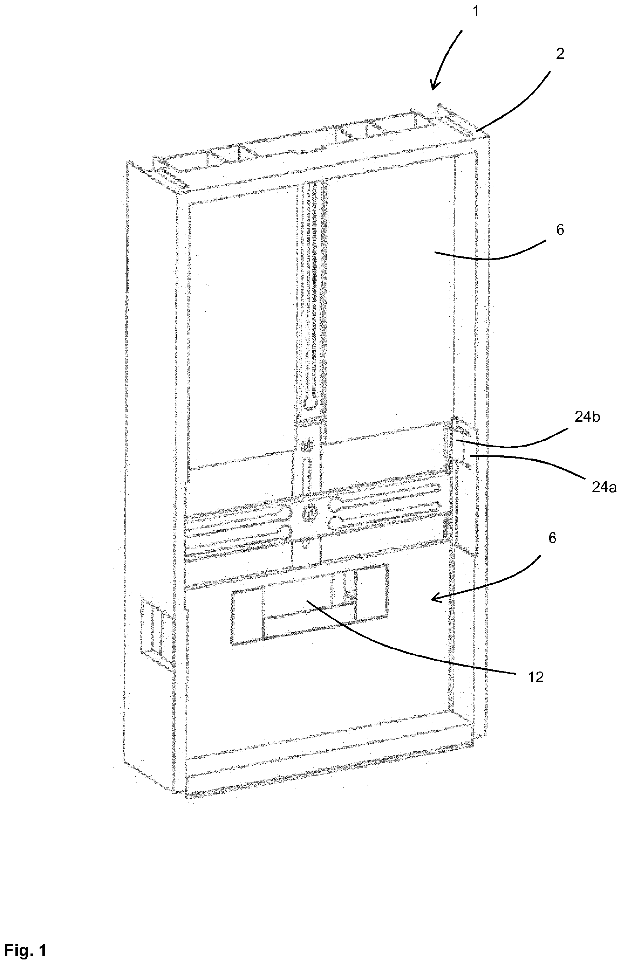

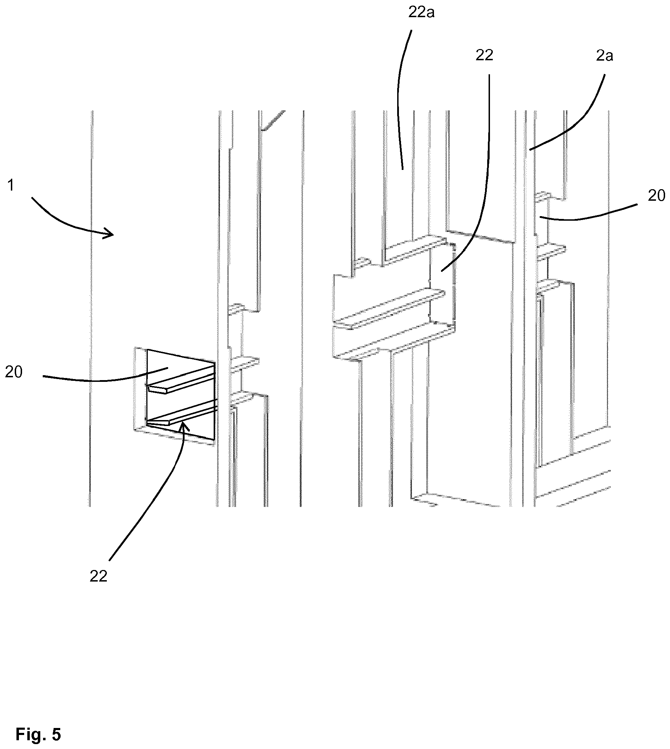

As it is shown in Figs. 1 to 6, a meter carrier board 1 for mounting a metering device 14 in a meter cabinet (not shown), comprises a three-point mount 10 with at least one first vertically extending slotted hole 10a and at least one, here in this embodiment two opposing laterally slotted holes 10b which are adapted to receive known fastening bolts or screws for mechanically coupling the metering device 14 to the front side of the meter carrier board 1 by means of the three-point mount 10.This embodiment with two opposing laterally slotted holes 10b is meant not to be a 30 limitation and is exemplarily only.

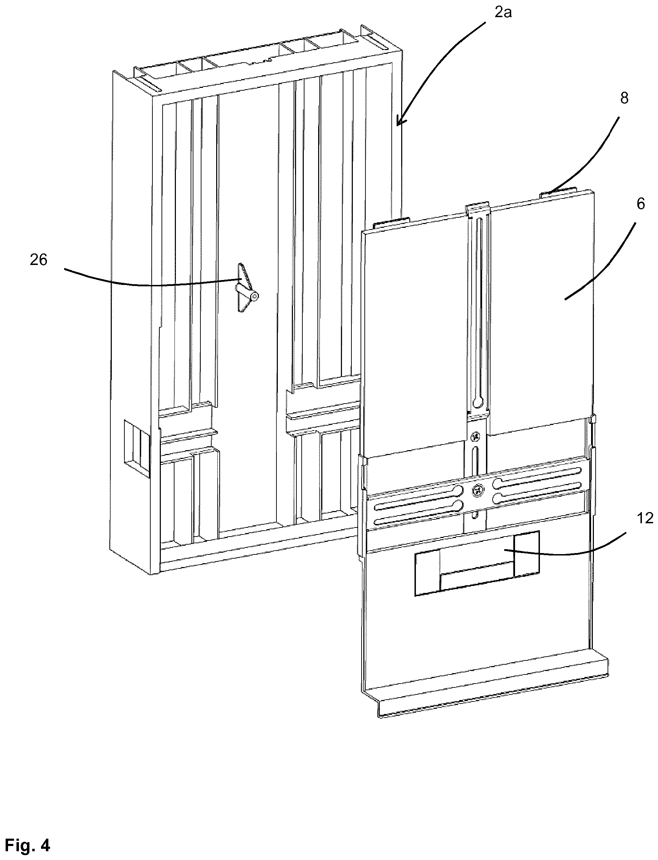

As it is indicated in Fig. 4, the meter carrier board 1 is composed of a housing 2 with two opposing side walls 2a and a front panel 6 which carries the three-point mount 10. The front panel 6 comprises an opening 12 and is adapted to be firmly coupled to the housing 2 by fastening elements 8 and 24, which will be described in detail herein below.

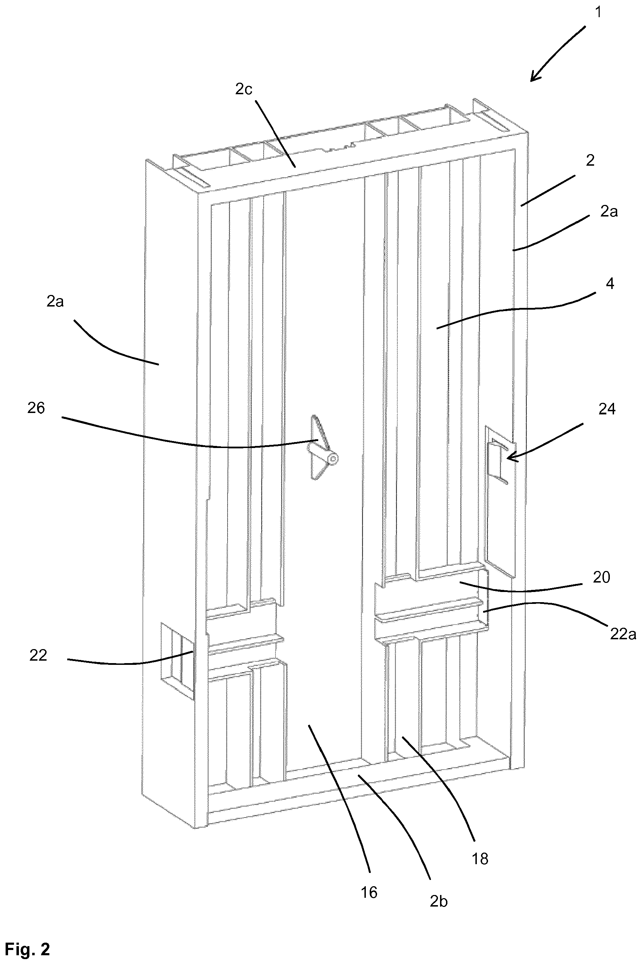

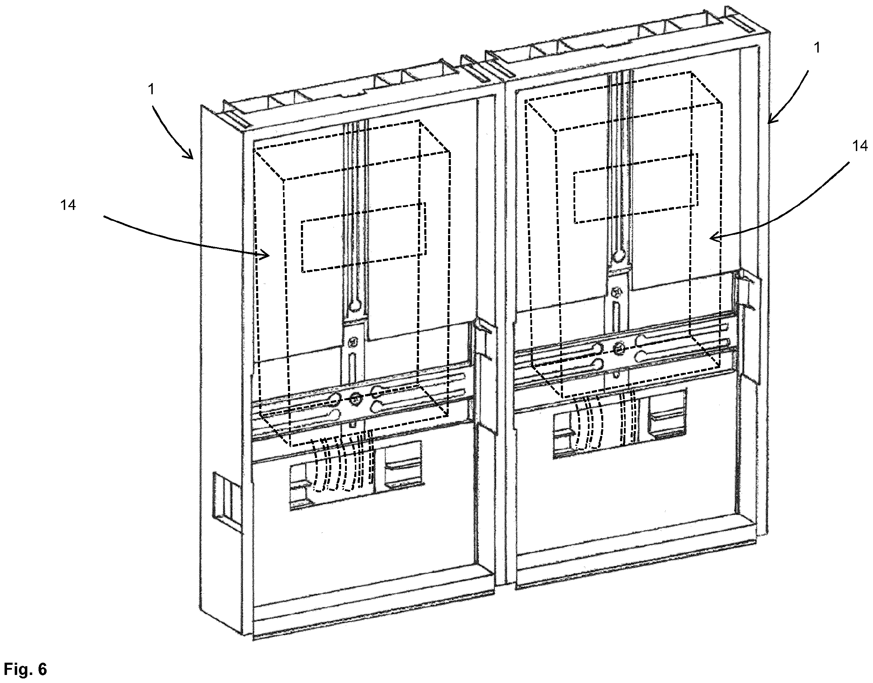

In the housing 2 a central cable duct 16 and a lateral cable duct 20 are formed preferably integrally with the rear wall or rear panel 4 of the housing 2. From Fig. 2 it can be seen that the central cable duct 16 inside the housing 2 is running in the vertical direction when the assembled meter carrier board 1 is mounted in a meter cabinet, whereas the lateral cable duct 20 is running in a direction which is perpendicular to the one of the central cable duct 16, that is substantially horizontally. From Fig. 6 it becomes clear that the lateral cable duct 20 is adapted to route data cables in the lateral direction from one metering device 14 to a neighboring metering device 14, in order to exchange any measuring data between two or even more metering devices 14.

As it can further be seen from Fig. 2, the lateral cable duct 20 communicates with a lateral opening 22 which is formed in at least one, but preferably both sidewalls 2a. The lateral opening/s 22 is/are covered by a removable cover 22a, which may be integrally formed with the side walls 2a and may be cut out or broken out of the side wall 2a through which the data cables shall be routed. After assembling the meter carrier board 1 by mounting the front panel 6 to the housing 2, the lateral cable duct 20 communicates with the opening 12 which is formed in the front panel 6, so that the lateral cable duct 20 is adapted to route metering and/or data cables from the metering device 14 to the lateral openings 22 in the side wall 2a.

In the preferred embodiment of the invention, the central cable duct 16 and the lateral cable duct 20 and preferably also the removable covers 22a are all integrally formed with the housing 2 as one piece from an electrically insulating plastics material, preferably polysterol. This allows to manufacture the meter carrier board of the 30 invention at considerably low costs as a mass product.

As it is further shown in Fig. 2, the central cable duct 16 advantageously extends in the vertical direction across the entire interior of the housing 2 and communicates with opposing openings which are formed in a lower bottom wall 2b and an upper top wall 2c of the housing 2.The opposing openings in the lower bottom wall 2b and the upper top wall 2c are adapted to route metering cables (not shown) from the metering device 14 to an upper mains connection area (NAR) and/or a lower system-side connection area (AAR) of a metering section of a distribution cabinet or switch gear cabinet.

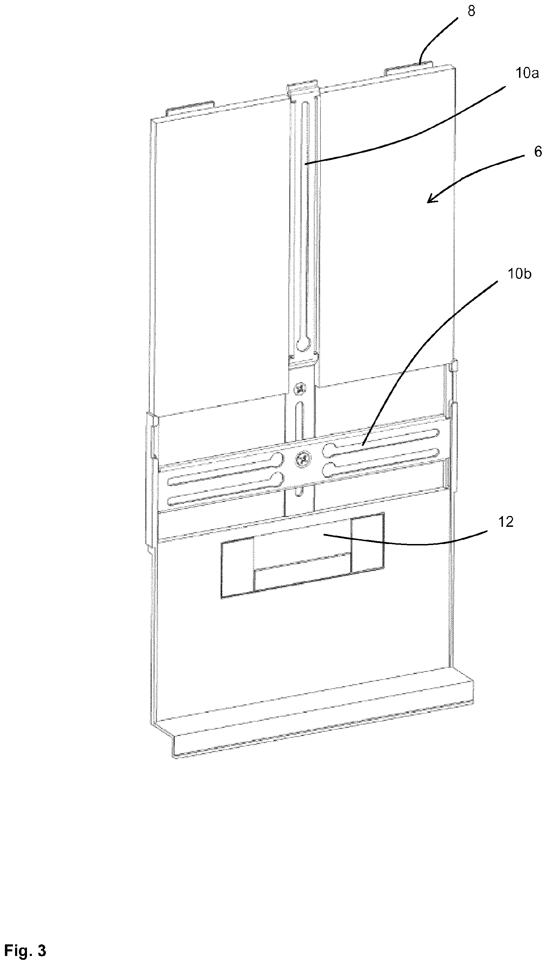

According to another aspect of the present invention, the fastening elements for fixedly connecting the front panel 6 to the housing 2, comprise at least one snap-in lug 8 which is formed at a lateral edge of the front panel 6, as it is indicated in Fig. 3. The fastening elements further comprise at least one spacer element 26 which is mounted to the rear panel 4 of the housing 2 and extends in a direction which according to Fig. 2 is perpendicular to the plane of the rear panel 4. The spacer element 26 has a length, which matches with the height of the side walls of the central and lateral cable ducts 16, 20, so that after inserting the snap-in lug 8 into an associated receiving opening in the upper top wall 2c of the housing 2 while the rear side of the front panel 6 abuts the spacer-element 26, the rear side of the front panel 6 snugly abuts the upper edges of the side walls of the central and lateral cable ducts 16, 20 so that the cable ducts are covered and closed by the rear side of the front panel 6. As it is shown in Fig.2, the spacer element 26 may comprise a central screw hole, which may be used to additionally connect the front panel 6 to the rear panel 4 by means of a screw (not shown) which extends through an associated bore in the front panel 6.

In order to releasably fasten the front panel 6 to the housing 2 a snap-in element 24 may be arranged at one of the side walls 2a which is adapted to extend across the front side of the front panel 6 and lock the same. In order to remove the front panel 6, the snap-in element 24, which is preferably formed as a tongue-shaped section 24a defined by three communicating cuts in the side wall 2a, is temporarily flexed back into an opening which is provided by the three cuts in the sidewall 2a from which only the two parallel cuts can be seen in Fig. 2. The tongue-shaped section 24a may further carry a wedge-type block 24b which abuts the front side of the front panel 6 in the assembled state of the meter carrier board shown in Fig. 1.

According to another preferred embodiment of the invention, a further vertical cable duct 18 for data and antenna cables may be formed in the housing 2, preferably at the rear panel 4 of the housing 2, which extends in a direction parallel to the one of the central cable duct 16, that is in the vertical direction. The further cable duct 18 provides for the advantage that data cables and/or the power lines for any smart metering devices may also be routed to the upper mains connection area (NAR) and/or the lower system-side connection area (AAR) of a metering section of a meter cabinet separate from the metering cables running in the central cable duct 16.

In order to reduce the danger of electromagnetic interferences caused by the electric currents running in the metering cables of the central cable duct 16, which may negatively affect the data signals running on the data cables, the lateral cable duct 20 and/or the further vertical cable duct 18 may comprise a shielding. The data cables may be guided within a second, separate cable duct within the meter carrier board, which second, separate cable duct is guided in an environment in Isolation to the current carrying cables.

The shielding may also be adapted to shield the metering device 14 against electromagnetic fields which are emitted by the metering and/or data cables which are routed inside the lateral cable duct 20 and further vertical cable duct 18. The shielding for the lateral cable duct 20 and the further vertical cable duct 18 may comprise a mesh which is made of a conducting material, preferably metal. In order to provide for an easy and cost effective manufacturing, the shielding may be attached to the inner sides of the cable ducts 16, 18 and 20 and the rear side of the front panel 6 in the areas which extend above the cable ducts 16, 18 and 20.

According to another embodiment of the invention, the first vertically extending slotted hole 10a and the at least one laterally slotted hole 1 0b of the three-point mount 10 are formed in rails which are mounted to the front side of the front panel 6, as it is shown in Fig. 1 and 3. This provides for the advantage that forces caused by the weight of the metering devices 14 are more evenly distributed into the front panel 6 of the meter carrier board 1. The rails may be formed integrally with the front panel 6 as a thickened section thereof when casting the front panel 6 from plastics material. Alternatively, the rails with the slots and openings of the slotted holes 10a, 10b may be formed of a different and more rigid material like metal or reinforced fiber glass which is attached to the front panel 6 after the casting of the front panel 6.

### List of reference numerals

- 1: assembled meter carrier board according to invention
- 2: housing of meter carrier board
- 2a: side wall of housing
- 2b: a lower bottom wall
- 2c: upper top wall
- 4: rear panel of meter carrier board
- 6: front panel of meter carrier board
- 8: snap-in lugs
- 10: three-point mount
- 10a: vertically slotted hole in front panel
- 10b: horizontally slotted hole in front panel
- 12: opening in front panel
- 14: metering device
- 16: central vertical cable duct in back panel of housing
- 18: further vertical cable duct for data cables
- 20: lateral cable duct
- 22: lateral opening in side wall
- 22a: removable cover
- 24: snap-in element mounted at side wall
- 24a: tongue-shaped section
- 24b: wedge-type block
- 26: spacer

## Claims

1. Meter carrier board (1) for mounting at least one metering device (14) in a meter cabinet, wherein said carrier board comprises a three-point mount (10) with at least a first vertically extending slotted hole (10a) and at least one laterally slotted hole (10b) which are adapted to receive fastening bolts for mechanically coupling said metering device (14) to the front side of said meter carrier board (1), wherein said meter carrier board (1) is configured to provide at least one cable duct within the meter carrier board (1) for routing cables to run within the meter carrier board (1), wherein the cable duct is a closed duct and the cables are within the cable duct protected against unauthorized access,
**characterized in that**
said meter carrier board (1) is composed of a housing (2) having two opposing side walls (2a) and a front panel (6) comprising said three-point mount (10), said front panel (6) being configured to cover the interior of the housing (2) and having an opening (12) and being adapted to be firmly coupled to said housing (2) by fastening elements (8, 24, 24a, 24b); wherein a lateral cable duct (20) is formed inside said housing (2), said lateral cable duct (20) running in a direction perpendicular to the direction of said side walls (2a) and communicating with a lateral opening (22) which is formed in at least one of said side walls (2a), wherein said lateral opening (22) is covered by a removable cover (22a), and wherein said lateral cable duct (20) communicates with said opening (12) in said front panel (6) and is adapted to route metering and/or data cables from said metering device (14) to said lateral opening (22) in said side wall (2a).

2. Meter carrier board according to claim 1,
**characterized in that**
said cables are cross-wiring data cables and/or wires for voltage supply connecting and/or supplying electrical devices within a meter cabinet (1).

3. Meter carrier board according to claim 1,
**characterized in that**
a central cable duct (16) is formed inside said housing (2), said central cable duct running in a direction substantially parallel to said side walls (2a).

4. Meter carrier board according to claim 3,
**characterized in that**
said central cable duct (16) and said lateral cable duct (20) and/or said removable cover (22a) are integrally formed with said housing (2) as one piece from an electrically insulating material.

5. Meter carrier board according to claim 3 or 4,
**characterized in that**
said central cable duct (16) extends across the entire interior of said housing (2) and communicates with opposing openings formed in a lower bottom wall (2b) and an upper top wall (2c) of said housing, said opposing openings being adapted to route metering cables from said metering device (14) to an upper mains connection area (NAR) and/or a lower system-side connection area (AAR) of a metering section of a distribution cabinet or switch gear cabinet.

6. Meter carrier board according to any of claims 1 - 5,
**characterized in that**
said fastening elements comprise at least one snap-in lug (8) formed at a lateral edge of said front panel (6), a spacer element (26) which is arranged at the rear panel (4) of said housing (2) and extends in a direction perpendicular to the plane of said rear panel (4) and at least one snap-in element (24) which is arranged at one of said side walls (2a) of said housing (2), and which is adapted to extend across the front side of said front panel (6) and lock said front panel 6 after inserting said snap-in lug (8) in a receiving opening formed in said housing (2) and moving said front panel (6) towards said spacer element (26).

7. Meter carrier board according to any of claims 1 - 6,
**characterized in that**
a further vertical cable duct (18) for data cables is formed in said housing (2), said further vertical cable duct (18) extending in a direction parallel to said central cable duct (16).

8. Meter carrier board according to claim 7,
**characterized in that**
said further vertical cable duct (18) comprises a shielding which is adapted to shield said metering device (14) and/or said data cables routed in said further vertical cable duct (18) against electromagnetic fields.

9. Meter carrier board according to any of claims 1 - 8,
**characterized in that**
said lateral cable duct (20) comprises a shielding which is adapted to shield said metering device (14) against electromagnetic fields which are emitted by said metering cables and/or said data cables routed inside said lateral cable duct (20).

10. Meter carrier board according to any of claims 1 - 9,
**characterized in that**
said at least one vertically extending slotted hole (10a) and/or said at least one laterally slotted hole (10b) are formed in rails which are arranged at the front side of said front panel (6).

11. Meter cabinet comprising a meter carrier board (1) according to any of the preceding claims.

## Patentansprüche

1. Zählerträgerplatte (1) zum Montieren mindestens einer Zählervorrichtung (14) in einem Zählerschrank, wobei die Trägerplatte eine Dreipunkthalterung (10) mit mindestens einem ersten sich vertikal erstreckenden Langloch (10a) und mindestens einem lateral verlaufenden Langloch (10b) umfasst, die dazu ausgelegt sind, Befestigungsschrauben zum mechanischen Koppeln der Zählervorrichtung (14) mit der Frontseite der Zählerträgerplatte (1) aufzunehmen, wobei die Zählerträgerplatte (1) dazu ausgestaltet ist, mindestens einen Kabelkanal in der Zählerträgerplatte (1) zum Führen von Kabeln, die in der Zählerträgerplatte (1) verlaufen, bereitzustellen, wobei der Kabelkanal ein geschlossener Kanal ist und die Kabel in dem Kabelkanal gegen unbefugten Zugriff geschützt sind,
**dadurch gekennzeichnet, dass**
die Zählerträgerplatte (1) aus einem Gehäuse (2) mit zwei entgegengesetzten Seitenwänden (2a) und einer Frontplatte (6) besteht, die die Dreipunkthalterung (10) umfasst, wobei die Frontplatte (6) dazu ausgestaltet ist, das Innere des Gehäuses (2) abzudecken, und eine Öffnung (12) aufweist und dazu eingerichtet ist, fest mit dem Gehäuse (2) durch Befestigungselemente (8, 24, 24a, 24b) gekoppelt zu sein; wobei ein lateraler Kabelkanal (20) in dem Gehäuse (2) gebildet ist, wobei der laterale Kabelkanal (20) in einer Richtung senkrecht zu der Richtung der Seitenwände (2a) verlauft und mit einer lateralen Öffnung (22) kommuniziert, die in mindestens einer der Seitenwände (2a) ausgebildet ist, wobei die laterale Öffnung (22) durch eine entfernbare Abdeckung (22a) abgedeckt ist, und wobei der laterale Kabelkanal (20) mit der Öffnung (12) in der Frontplatte (6) kommuniziert und dazu eingerichtet ist, Zähler- und/oder Datenkabel von der Zählervorrichtung (14) zu der lateralen Öffnung (22) in der Seitenwand (2a) zu führen.

2. Zählerträgerplatte nach Anspruch 1,
**dadurch gekennzeichnet, dass**
die Kabel Querverdrahtungsdatenkabel und/oder Drähte für einen Spannungsversorgungsanschluss und/oder ein Versorgen von elektrischen Vorrichtungen in einem Zählerschrank (1) sind.

3. Zählerträgerplatte nach Anspruch 1,
**dadurch gekennzeichnet, dass**
ein mittlerer Kabelkanal (16) in dem Gehäuse (2) ausgebildet ist, wobei der mittlere Kabelkanal in einer Richtung im Wesentlichen parallel zu den Seitenwänden (2a) verläuft.

4. Zählerträgerplatte nach Anspruch 3,
**dadurch gekennzeichnet, dass**
der mittlere Kabelkanal (16) und der laterale Kabelkanal (20) und/oder die entfernbare Abdeckung (22a) integral mit dem Gehäuse (2) einstückig aus einem elektrisch isolierenden Material ausgebildet sind.

5. Zählerträgerplatte nach Anspruch 3 oder 4,
**dadurch gekennzeichnet, dass**
sich der mittlere Kabelkanal (16) über das gesamte Innere des Gehäuses (2) erstreckt und mit entgegengesetzten Öffnungen kommuniziert, die in einer unteren Bodenwand (2b) und einer oberen Deckenwand (2c) des Gehäuses ausgebildet sind, wobei die entgegengesetzten Öffnungen dazu ausgelegt sind, Zählerkabel von der Zählervorrichtung (14) zu einem oberen Stromnetzanschlussbereich (NAR) und/oder einem unteren systemseitigen Anschlussbereich (AAR) eines Zählerabschnitts eines Verteilerschranks oder Schaltschranks zu führen.

6. Zählerträgerplatte nach einem der Ansprüche 1-5,
**dadurch gekennzeichnet, dass**
die Befestigungselemente mindestens eine Rastnase (8), die an einer lateralen Kante der Frontplatte (6) ausgebildet ist, ein Abstandselement (26), das an der Rückplatte (4) des Gehäuses (2) angeordnet ist und sich in einer Richtung senkrecht zu der Ebene der Rückplatte (4) erstreckt, und mindestens ein Rastelement (24) umfassen, das an einer der Seitenwände (2a) des Gehäuses (2) angeordnet ist und das dazu ausgelegt ist, sich über die Frontseite der Frontplatte (6) zu erstrecken und die Frontplatte (6) nach Einsetzen der Rastnase (8) in eine in dem Gehäuse (2) ausgebildete Aufnahmeöffnung und Bewegen der Frontplatte (6) hin zu dem Abstandselement (26) zu verriegeln.

7. Zählerträgerplatte nach einem der Ansprüche 1-6, **dadurch gekennzeichnet, dass**
ein weiterer vertikaler Kabelkanal (18) für Datenkabel in dem Gehäuse (2) ausgebildet ist, wobei sich der weitere vertikale Kabelkanal (18) in einer Richtung parallel zu dem mittleren Kabelkanal (16) erstreckt.

8. Zählerträgerplatte nach Anspruch 7,
**dadurch gekennzeichnet, dass**
der weitere vertikale Kabelkanal (18) eine Abschirmung umfasst, die dazu ausgelegt ist, die Zählervorrichtung (14) und/oder die Datenkabel, die in dem weiteren vertikalen Kabelkanal (18) geführt sind, gegen elektromagnetische Felder abzuschirmen.

9. Zählerträgerplatte nach einem der Ansprüche 1-8, **dadurch gekennzeichnet, dass**
der laterale Kabelkanal (20) eine Abschirmung umfasst, die dazu ausgelegt ist, die Zählervorrichtung (14) gegen elektromagnetische Felder abzuschirmen, die durch die Zählerkabel und/oder die Datenkabel, die in dem lateralen Kabelkanal (20) geführt sind, emittiert werden.

10. Zählerträgerplatte nach einem der Ansprüche 1-9, **dadurch gekennzeichnet, dass**
das mindestens eine sich vertikal erstreckende Langloch (10a) und/oder das mindestens eine lateral verlaufende Langloch (10b) in Schienen ausgebildet sind, die an der Frontseite der Frontplatte (6) angeordnet sind.

11. Zählerschrank, der eine Zählerträgerplatte (1) nach einem der vorhergehenden Ansprüche umfasst.

## Revendications

1. Tableau support (1) de compteurs destiné à monter au moins un dispositif (14) de comptage dans une armoire de comptage, ledit tableau support comportant une fixation (10) à trois points dotée d'au moins un premier trou rainuré (10a) s'étendant verticalement et d'au moins un trou (10b) rainuré latéralement qui sont prévus pour recevoir des boulons d'assemblage servant à coupler mécaniquement ledit dispositif (14) de comptage à la face avant dudit tableau support (1) de compteurs, ledit tableau support (1) de compteurs étant configuré pour ménager, à l'intérieur du tableau support (1) de compteurs, au moins une goulotte à câbles servant à acheminer des câbles pour qu'ils passent à l'intérieur du tableau support (1) de compteurs, la goulotte à câbles étant une goulotte fermée et les câbles étant, à l'intérieur de la goulotte à câbles, protégés contre un accès non autorisé,
**caractérisé en ce que**
ledit tableau support (1) de compteurs est composé d'un boîtier (2) doté de deux parois latérales (2a) opposées et d'un panneau avant (6) comportant ladite fixation (10) à trois points, ledit panneau avant (6) étant configuré pour recouvrir l'intérieur du boîtier (2) et présentant une ouverture (12) et étant prévu pour être couplé fermement audit boîtier (2) par des éléments (8, 24, 24a, 24b) d'assemblage ; une goulotte latérale (20) à câbles étant formée à l'intérieur dudit boîtier (2), ladite goulotte latérale (20) à câbles passant dans une direction perpendiculaire à la direction desdites parois latérales (2a) et communiquant avec une ouverture latérale (22) qui est formée dans au moins une desdites parois latérales (2a), ladite ouverture latérale (22) étant recouverte par un couvercle amovible (22a), et ladite goulotte latérale (20) à câbles communiquant avec ladite ouverture (12) dans ledit panneau avant (6) et étant prévu pour acheminer des câbles de comptage et/ou de données dudit dispositif (14) de comptage à ladite ouverture latérale (22) dans ladite paroi latérale (2a).

2. Tableau support de compteurs selon la revendication 1,
**caractérisé en ce que**
lesdits câbles sont des câbles de données de câblage transversal et/ou des fils servant à raccorder pour une alimentation en tension et/ou à alimenter des dispositifs électriques à l'intérieur d'une armoire (1) de comptage.

3. Tableau support de compteurs selon la revendication 1,
**caractérisé en ce que**
une goulotte centrale (16) à câbles est formée à l'intérieur dudit boîtier (2), ladite goulotte centrale à câbles s'étendant dans une direction sensiblement parallèle auxdites parois latérales (2a).

4. Tableau support de compteurs selon la revendication 3,
**caractérisé en ce que**
ladite goulotte centrale (16) à câbles et ladite goulotte latérale (20) à câbles et/ou ledit couvercle amovible (22a) sont formés de façon intégrée avec ledit boîtier (2) d'un seul tenant à partir d'un matériau électriquement isolant.

5. Tableau support de compteurs selon la revendication 3 ou 4,
**caractérisé en ce que**
ladite goulotte centrale (16) à câbles s'étend sur la totalité de l'intérieur dudit boîtier (2) et communique avec des ouvertures opposées formées dans une paroi inférieure (2b) de fond et une paroi supérieure (2c) de sommet dudit boîtier, lesdites ouvertures opposées étant prévues pour acheminer des câbles de comptage dudit dispositif (14) de comptage à une zone supérieure (NAR) de raccordement au réseau et/ou à une zone inférieure (AAR) de raccordement côté système d'une section de comptage d'une armoire de distribution ou d'une armoire de disjoncteurs.

6. Tableau support de compteurs selon l'une quelconque des revendications 1 à 5,
**caractérisé en ce que**
lesdits éléments d'assemblage comportent au moins un ergot (8) d'encliquetage formé à un bord latéral dudit panneau avant (6), un élément (26) d'espacement qui est disposé au niveau du panneau arrière (4) dudit boîtier (2) et s'étend dans une direction perpendiculaire au plan dudit panneau arrière (4) et au moins un élément (24) d'encliquetage qui est disposé au niveau d'une desdites parois latérales (2a) dudit boîtier (2), et qui est prévu pour s'étendre en travers de la face avant dudit panneau avant (6) et bloquer ledit panneau avant (6) après avoir inséré ledit ergot (8) d'encliquetage dans une ouverture réceptrice formée dans ledit boîtier (2) et déplacé ledit panneau avant (6) vers ledit élément (26) d'espacement.

7. Tableau support de compteurs selon l'une quelconque des revendications 1 à 6,
**caractérisé en ce que**
une goulotte verticale supplémentaire (18) à câbles destinée à des câbles de données est formée dans ledit boîtier (2), ladite goulotte verticale supplémentaire (18) à câbles s'étendant dans une direction parallèle à ladite goulotte centrale (16) à câbles.

8. Tableau support de compteurs selon la revendication 7,
**caractérisé en ce que**
ladite goulotte verticale supplémentaire (18) à câbles comporte un blindage qui est prévu pour protéger ledit dispositif (14) de comptage et/ou lesdits câbles de données acheminés dans ladite goulotte verticale supplémentaire (18) à câbles contre les champs électromagnétiques.

9. Tableau support de compteurs selon l'une quelconque des revendications 1 à 8,
**caractérisé en ce que**
ladite goulotte latérale (20) à câbles comporte un blindage qui est prévu pour protéger ledit dispositif (14) de comptage contre les champs électromagnétiques qui sont émis par lesdits câbles de comptage et/ou lesdits câbles de données acheminés à l'intérieur de ladite goulotte latérale (20) à câbles.

10. Tableau support de compteurs selon l'une quelconque des revendications 1 à 9,
**caractérisé en ce que**
ledit ou lesdits trous rainurés (10a) s'étendant verticalement et/ou ledit ou lesdits trous (10b) rainurés latéralement sont formés dans des rails qui sont disposés au niveau de la face avant dudit panneau avant (6).

11. Armoire de comptage comportant un tableau support (1) de compteurs selon l'une quelconque des revendications précédentes.
